# EUROPÄISCHE PATENTSCHRIFT

(11) **EP 1 297 748 B1**
(45) Veröffentlichungstag und Bekanntmachung des Hinweises auf die Patenterteilung: **22.04.2009**
(21) Anmeldenummer: 02012165.3
(22) Anmeldetag: 03.06.2002
(51) Int. Cl.: A22C 21/02, A22C 21/04

(54) **Verfahren und Vorrichtung zur Vorbereitung von geschlachtetem Geflügel auf das Rupfen**
Method and device for preparing slaughtered poultry for plucking
Procédé et appareil pour la préparation d'une volaille abattue au plumage

(30) Priorität: 01.10.2001 DE 10148568
(43) Veröffentlichungstag der Anmeldung: 02.04.2003
(73) Patentinhaber: Linco Food Systems A/S, 8380 Trige (DK)
(72) Erfinder: Wichelmann, Bernhard, 49393 Lohne (DE)
(74) Vertreter: Gregersen, Niels Henrik

(56) Entgegenhaltungen:
- DE-A- 2 007 305
- GB-A- 1 148 932
- US-A- 2 152 082
- US-A- 3 074 103
- US-A- 3 748 691

## Beschreibung

Die Erfindung betrifft ein Verfahren und eine Vorrichtung zur Vorbereitung von geschlachtetem Geflügel auf das Rupfen, bei dem die Körper des Geflügels der Wirkung eines Brüheffektes ausgesetzt werden.

Es ist bekannt, dass Geflügel, wie beispielsweise Hühner, Gänse oder Puten, in erhitztem Wasser gebrüht werden. Hierzu werden die Körper des Geflügels für eine vorbestimmte Zeit in erhitztes Wasser gegeben.

Bekannte Vorrichtungen weisen das erhitzte Wasser beinhaltende Wasserbäder auf, die von den Körpern des Geflügels fliessbandartig durchlaufen werden. Ein erster Nachteil eines derartigen Verfahrens und der bekannten Vorrichtungen besteht darin, dass das Gefieder eines jeden, das Wasserbad durchlaufenden Körpers Wasser aufnimmt, so dass ein Wasserverbrauch gegeben ist. Ein weiterer, besonders schwerwiegender Nachteil besteht darin, dass von jedem Körper Substanzen, wie beispielsweise Blut, Kot oder Verschmutzungen, in das Wasser abgegeben werden, so dass dieses innerhalb einer kurzen Zeit stark verunreinigt und bakteriell belastet ist. Jeder weitere Körper, der das Wasserbad durchläuft, kommt mit den Verunreinigungen, Bakterien und Keimen all derjenigen Körper in Kontakt, die das Wasserbad vor ihm durchlaufen haben.

Um die Belastung des Wassers, insbesondere mit Keimen und Bakterien, in akzeptablen Grenzen zu halten, wird das belastete Wasser regelmässig ausgetauscht. Dazu wird das belastete, noch heisse Wasser aus den Wasserbädern in die Kanalisation abgelassen, was, abgesehen von der Gesundheitsgefährdung, auch eine extreme Belastung für die Umwelt bzw. für Kläranlagen bedeutet. Ausserdem gehen durch das Ableiten des noch heissen Wassers nutzbare Energien, insbesondere in Form von nutzbarer Wärme, verloren bzw. es muss Energie für die Erhitzung von Frischwasser bereitgestellt werden.

DE-A-20 07 305 beschreibt eine Vorrichtung und ein Verfahren zum Vorbereiten von frisch geschlachtetem Geflügel für das maschinelle Rupfen in einer bekanten Rupfmaschine, insbesondere eine Vorrichtung und ein Verfahren zum Vorbereiten von Geflügel für das Rupfen unter Verwendung eines heissen, vorzugsweise dampfförmigen Behandlungsmittels. Insbesondere betrifft die Beschreibung eine Vorrichtung, in welcher Geflügel durch einen geschlossenen Raum bewegt und dabei der federnlockernden und bakterientötenden Wirkung eines heissen Sprühmittels in einer hygienischen Umgebung ausgesetzt wird. Diese Vorrichtung soll inbesondere die üblichen unhygienischen Tauchbehälter ersetzen, in welchen Geflügel bisher vor dem Entfederen behandelt wurde.

Der Erfindung liegt die Aufgabe zugrunde, ein Verfahren der eingangs genannten Gattung und eine Vorrichtung zur Durchführung des Verfahrens zu verbessern.

Die Erfindung ist erfindungsgemäss mit einem Verfahren mit den Merkmalen des Patentanspruchs 1 und einer Vorrichtung mit den Merkmalen des Patentanspruchs 11 gelöst. Vorteilhafte Weiterbildungen der Erfindung sind in den Unteransprüchen beschrieben.

Das erfindungsgemässe Verfahren ist **dadurch gekennzeichnet, dass** der Wasserdampf in den unteren Bereich des Brühraumes eingeleitet wird, dass der Brühraum dabei auf eine vorbestimmte Temperatur aufgeheizt wird, dass die Körper in den aufgeheizten Brühraum gegeben werden, dass innerhalb des Brühraumes wenigstens eine Strömung des darin befindlichen Wasserdampf-Luftgemisches erzeugt wird und dass die Strömung gegen vorbestimmtes Bereiche, an denen sich die Federn schwerer rupfen lassen, als an anderen Bereichen des Körpers, wenigstens eines der Körper der Geflügels gelenkt wird, die Strömungseinrichtung wenigstens einen Ventilator mit einer das Wasserdampf-Luftgemisch aus dem Inneren des Brühraumes ansaugenden Saugleiter und einer das Wasserdampf-Luftgemisch dem Brühraum gezielt wieder zuführenden Druckleitung aufweist.

Mit diesen Merkmalen ist ein Verfahren geschaffen, bei dem kein zu entsorgendes, belastetes Wasser anfällt. Das gegen die vorbestimmten Bereiche wenigstens eines der Körper des Geflügels gelenkte Wasserdampf-Luftgemisch bewirkt ein Kondensieren des Wasserdampfes auf der Haut des Körpers, wodurch der Brüheffekt erreicht wird. Damit die Strömung des Wasserdampf-Luftgemisches nicht an dem dichten Gefieder eines Körpers abgelenkt wird, sollte die Strömung vorzugsweise gegen den Federstrich des Gefieders gerichtet sein, wobei sich das Gefieder unter der Strömung abspreizt und damit dem Wasserdampf-Luftgemisch und der in ihm enthaltenen Wärme ein direktes Einwirken auf die Haut ermöglicht wird.

Die vorbestimmten Bereiche, gegen die die Strömung gelenkt wird, sind vorzugsweise Bereiche, an denen sich die Federn schwerer rupfen lassen, als an anderen Bereichen des Körpers. So können beispielsweise insbesondere gegen den Rücken, den Hals und die Keulen gelenkte Strömungen vorgesehen sein. Verschiedenen Bereichen können variierte bzw. speziell angepasste Strömungen zugeordnet werden.

Eine optimale und rasche Aufheizung kann durch Nutzung der Thermik innerhalb des Brühraumes erreicht werden, indem der Wasserdampf in den unteren Bereichen des Brühraumes eingeleitet wird. Er steigt dann aus den unteren Bereichen, gegebenenfalls unter Verwirbelungen, in die oberen Bereiche des Brühraumes auf.

Versuche haben gezeigt, dass optimale Brüheffekte dann erzeugt werden, wenn der Brühraum auf eine Temperatur von etwa 55° C bis 60° C aufgeheizt wird. Die jeweils gewählte Temperatur ist jedoch von der Art des Geflügels und von der Zeit, in der die Strömung gegen die vorbestimmten Bereiche der Körper gelenkt wird, abhängig.

Nach einer Weiterbildung der Erfindung ist vorgesehen, dass die im Brühraum befindliche Luft mit Wasserdampf gesättigt wird. An den relativ kühlen Hautoberflächen der Körper kommt es bei der Sättigung zu Kondensationseffekten unter Freisetzung von Kondensationswärme, die eine Brühwirkung unterstützt. Es ist jedoch ebenso denkbar, dass andere, geringfügig von der absoluten Sättigung abweichende Sättigungsgrade zu guten Ergebnissen bei der Erlangung eines Brüheffektes führen.

Die Körper des Geflügels werden an den Füssen hängend mit einer vorgegebenen Durchlaufgeschwindigkeit entlang einer Bahn eines Transportorgans durch den Brühraum hindurchgeführt. Die Körper werden beispielsweise mit den Füssen an Haken- oder Schlaufenelementen des Transportorgans in vorbestimmten, gleichbleibenden Abständen zueinander aufgehängt. Das Aufhängen der Körper stellt hier jedoch lediglich eine bevorzugte Variante des Hindurchführens durch den Brühraum dar. Es ist ebenso denkbar, die Körper in anderer lagedefinierter Weise mit dem Transportorgan in Verbindung zu bringen.

Die Strömung des Wasserdampf-Luftgemisches wird mit Vorteil in einem Kreislauf erzeugt. Das Wasserdampf-Luftgemisch wird hierbei dem Brühraum in vorbestimmten Bereichen entnommen und an anderen, vorbestimmten Bereichen gezielt wieder zugeführt. Vorzugsweise wird das Wasserdampf-Luftgemisch dem oberen Bereich des Brühraumes entnommen, in welchem die Temperatur aufgrund der Thermik am grössten ist.

Nach einer Weiterbildung wird der Kreislauf zur Schnellkühlung des Brühraumes bei Bedarf zur äusscren Umgebung hin geöffnet. Dies ist insbesondere dann erforderlich, wenn das Transportorgan stoppt, zum Beispiel aufgrund einer Störung in einer anderen Station einer Schlachtanlage, da die Körper andernfalls aufgrund einer zu langen Verweilzeit in dem Brühraum Schaden nehmen können.

Bei dem erfindungsgemässen Verfahren werden die Körper im Brühraum nacheinander an einer Vielzahl gelenkter Strömungen vorbeigeführt. Der Vorteil eines derartigen Schrittes liegt darin, dass das Verfahren so bei allen, eine konstante Durchlaufgeschwindigkeit aufweisenden Schlachtstrassen bzw. Bahnen eines Transportorganes angewendet werden kann.

Nach einer bevorzugten Weiterbildung der Erfindung ist es möglich, dass die Temperatur und der Dampfgehalt des Wasserdampf-Luftgemisches geregelt und gemessen werden. Auf diese Weise können mit dem Verfahren unterschiedliche Einflüsse und sich verändernde Parameter bewältigt werden..Es ist weiterhin vorgesehen, dass die Geschwindigkeit der Strömung des Wasserdampf-Luftgemisches geregelt und gemessen wird. Selbstverständlich können jedoch sämtliche anderen, das Verfahren beeinflussende Parameter geregelt und gemessen werden.

Die erfindungsgemässe Vorrichtung dient insbesondere der Anwendung des in den Patentansprüchen 1 bis 9 beschriebenen Verfahrens. Sie ist gekennzeichnet durch einen Brühraum, durch eine Einrichtung zum Einleiten von Wasserdampf in den Brühraum, durch wenigstens ein Transportorgan zum Transportieren des Geflügels durch den Brühraum hindurch, durch eine Strömungseinrichtung zur Erzeugung wenigstens einer Strömung des Wasserdampf-Luftgemisches innerhalb des Brühraums und durch eine Lenkeinrichtung zur Lenkung einer Strömung des Wasserdampf-Luftgemisches gegen bestimmte Bereiche, an denen sich die Federn schwerer rupfen lassen, als an anderen Bereichen des Körpers, wenigstens eines der Körper des Geflügels. Der Brühraum weist vorzugsweise eine Grösse auf, die es einer Person ermöglicht, ihn zu betreten. Der Vorteil liegt darin, dass der Brühraum auf diese Weise einfach zu warten und zu reinigen ist.

Die Einrichtung zum Einleiten von Wasserdampf ist im unteren Bereich des Brühraumes angeordnet. Dabei ist sie als einfacher Einlassstutzen ausgebildet, der den Wasserdampf mit niedriger Geschwindigkeit in den Brühraum einleitet. Die niedrige Geschwindigkeit des Wasserdampfes gewährleistet einen geringen dynamischen Druck im Bereich des Wasserdampfstrahles. Ein geringer dynamischer Druck ermöglicht eine optimale Aufnahme des Wasserdampfes in die Luft, wobei eine unerwünschte Tröpfchenbildung weitestgehends vermieden ist.

Der Brühraum weist am Eintritt sowie am Austritt des durch ihn hindurchverlaufenden Transportorgans jeweils wenigstens eine Schleusenkammer auf. Die Schleusenkammern wirken den Wärmeverlusten am Eintritt sowie am Austritt des Brühraumes entgegen.

Das Transportorgan ist als eine durch den Brühraum hindurchverlaufende Schlachtkette ausgebildet, die einen schleifenartig, in nahezu parallelen Strängen zueinanderliegenden Verlauf zum lagedefinierten Abhängen der Körper an ihren Füssen aufweist. Ein derartiger Verlauf der Schlachtkette hat den Vorteil einer optimalen Platzausnutzung innerhalb des Brühraumes.

Das Transportorgan weist innerhalb des Brühraumes bei einer vorgegebenen Durchlaufgeschwindigkeit eine auf eine geforderte Verweilzeit der Körper in dem Brühraum abgestimmte Länge auf. Die Durchlaufgeschwindigkeit ist von der gesamten Schlachtanlage vorgegeben. Die Verweilzeit der Körper in dem Brühraum ist zum Beispiel bei Puten mit etwa vier Minuten ermittelt worden, woraus sich dann die benötigte Länge des innerhalb des Brühraumes liegenden Teiles des Transportorgans ergibt.

Die Strömungseinrichtung weist wenigstens einen Ventilator mit einer das Wasserdampf-Luftgemisch aus dem Inneren des Brühraumes ansaugenden Saugleitung und einer das Wasserdampf-Luftgemisch in den Brühraum gezielt wieder zuführenden Druckleitung auf. Es ist ebenso denkbar, andere Axialverdichter vorzusehen. Auch der Einsatz von Radialverdichtern oder Kolbenverdichtern ist hier ebenso denkbar.

Nach einer Weiterbildung der Erfindung weist wenigstens ein Ventilator einen seiner Saugleitung zugeordneten Klappenkasten auf, der eine bei Bedarf betätigbare Klappe hat, mit der eine zur äusseren Umgebung offene Klappenkasten-Öffnung verschlossen ist. Diese Ausgestaltung ermöglicht ein schnelles Zuführen von Frischluft in den Brühraum. Ein Bedarfsfall zum Betätigen der Klappe ist beispielsweise dann gegeben, wenn, zum Beispiel durch eine Störung hervorgerufen, das Transportorgan ausfällt, so dass die Körper des Geflügels in dem Brühraum zu lange verweilen würden.

Die Lenkeinrichtung weist innerhalb des Brühraumes angeordnete Düsenhalter zum Anordnen und Ausrichten jeweils wenigstens einer Düse auf. Es ist ebenso denkbar, dass der Lenkeinrichtung die Strömung ebenfalls lenkende Luftleitbleche zugeordnet sind.

Nach einer Weiterbildung ist ein erster Düsenhalter als insbesondere horizontale Rohrleitung mit einer Anzahl von über ihre Länge und ihren Umfang verteilt angeordneten Düsen ausgebildet, von denen jede mit ihrer Düsenmündung gegen einen ihr zugeordneten, vorbestimmten Bereich des jeweils an ihr vorbei transportierten Körpers gerichtet ist. Jede Rohrleitung verläuft vorzugsweise im oberen Bereich -des Brühraumes, da so ein unerwünschtes Auskühlen des in der Rohrleitung strömenden Wasserdampf-Luftgemisches ausgeschlossen ist.

Ein zweiter Düsenhalter ist als sich vertikal zwischen die Tierkörper erstreckendes Sackrohr mit einer Anzahl von über seine Länge und seinen Umfang verteilt angeordneten Düsen ausgebildet, von denen jede mit ihrer Düsenmündung gegen einen ihr zugeordneten, vorbestimmten Bereich des jeweils an ihr vorbei transportierten Körpers gerichtet ist. Als Sackrohr ist hier ein Rohr mit einem geschlossenen Rohrende zu verstehen. Es liegt im Rahmen der Erfindung, dass das Rohrende ebenfalls eine Düse aufweist bzw. als Düse ausgebildet ist. Nach einer bevorzugten Ausgestaltung ist es denkbar, dass das Rohr einen kurvenförmigen, an einen Körper des Geflügels angepassten Verlauf aufweist, mit dem die einzelnen Düsen besonders dicht an den Körper herangehalten werden können.

Die ersten und zweiten Düsenhalter sind in Reihe angeordnet, wobei die Reihen zwischen parallelen Strängen der schleifenartig verlaufenden Schlachtkette angeordnet sind. Auch diese Ausgestaltung ermöglicht einen kompakten Aufbau der Vorrichtung. So ist jeder Düsenhalter für ein zeitgleiches Beströmen zweier Körper ausgebildet, wobei sich die Körper jeweils an einem anderen Strang zweier, den Düsenhalter zwischen sich einschliessenden, parallel zueinander verlaufenden Stränge befinden.

Nach einer anderen Weiterbildung der Erfindung weist die Vorrichtung ein automatisches Mess- und Regelsystem zum Messen und Regeln der Temperatur und des Dampfgehaltes des Wasserdampf-Luftgemisches in dem Brühraum auf. Des weiteren ist ein automatisches Mess- und Regelsystem zum Messen und Regeln der Strömungsgeschwindigkeit des Wasserdampf-Luftgemisches innerhalb der Strömungseinrichtung vorgesehen. Derartige Mess- und Regelsysteme umfassen bekannte Sensoren und Messeinrichtungen, deren von ihnen gelieferten Messwerte auf elektronischem Wege ausgewertet werden. Es liegt dabei im Rahmen der Erfindung, dass die hier vorgesehenen Mess- und Regelsysteme mit einer Anlage zur elektronischen Datenverarbeitung ausgewertet und gesteuert werden.

Ein Ausführungsbeispiel der Erfindung, aus dem sich weitere erfinderische Merkmale ergeben, ist in den Zeichnungen dargestellt. Es zeigen:
Fig. 1: eine Seitenansicht der erfindungsgemässen Vorrichtung im Schnitt;
Fig. 2: eine Draufsicht der Vorrichtung im Schnitt;
Fig. 3: eine Vorderansicht der Vorrichtung in einem ersten Teilschnitt;
Fig. 4: eine Seitenansicht der Vorrichtung in einem ersten Teilschnitt;
Fig. 5: eine Vorderansicht der Vorrichtung in einem zweiten Teilschnitt und
Fig. 6: eine Seitenansicht der Vorrichtung in einem zweiten Teilschnitt.

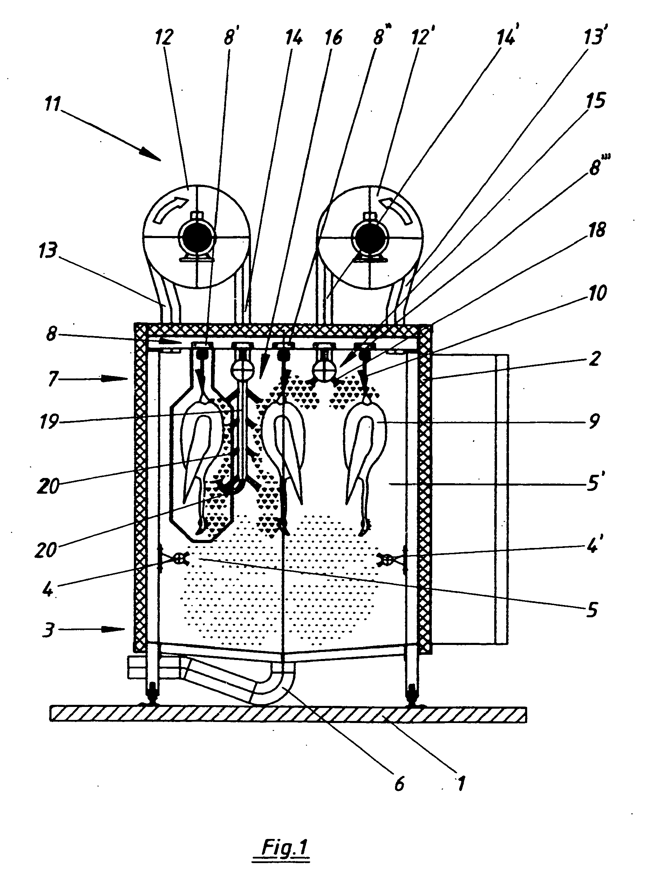

Fig. 1 zeigt eine Draufsicht der erfindungsgemässen Vorrichtung im Schnitt. Auf einem Fundament 1 ist ein Brühraum 2 aufgestellt, der an seinem unteren Bereich 3 zwei Dampfdüsen aufweisende Einrichtungen 4, 4' zum Einleiten von Wasserdampf 5 aufweist. An tiefster Position des Brühraumes 2 ist ein Ablaufrohr 6 zum Abführen von sich an den Wandungen des Brühraumes 2 bildenden Kondenswassers angeordnet. Im oberen Bereich 7 des Brühraumes 2 ist ein den Brühraum 2 durchlaufendes, als Schlachtkette ausgebildetes Transportorgan 8 angeordnet, das einen schleifenartig in in etwa parallelen Strängen 8', 8", 8"' zueinanderliegenden Verlauf zum lagedefinierten Abhängen von Körpern 9 des Geflügels an ihren Füssen 10 aufweist. Die Strömungseinrichtung 11 weist zwei ausserhalb des Brühraumes 2 angeordnete Ventilatoren 12, 12' mit jeweils einer das Wasserdampf-Luftgemisch 5' aus dem Brühraum 2 ansaugenden Saugleitung 13, 13' und jeweils einer das Wasserdampf-Luftgemisch 5' dem Brühraum 2 gezielt wieder zuführenden Druckleitung 14, 14' auf.

Der sich innerhalb des Brühraumes 2 fortsetzende Teil der Druckleitungen 14, 14' bildet die Lenkeinrichtung, die als Düsenhalter 15, 16 ausgebildet sind. Erste Düsenhalter 15 weisen eine horizontale Rohrleitung 17 mit einer Anzahl von über ihre Länge und ihrem Umfang verteilt angeordneten Düsen 18 auf. Zweite Düsenhalter 16 weisen ein sich vertikal zwischen die Körper 9 erstreckendes Sackrohr 19 mit einer Anzahl von über seine Länge und seinen Umfang verteilt angeordneten Düsen 20 auf. Dabei ist jede Düse 18, 20 mit ihrer Düsenmündung gegen einen ihr zugeordneten, vorbestimmten Bereich der jeweils an ihr vorbei transportierten Körper 9 gerichtet.

Die zweiten Düsenhalter 16 sind in Reihen angeordnet, wobei die Reihen zwischen parallelen Strängen 8', 8", des schleifenartig verlaufenden Transportorgans 8 angeordnet sind.

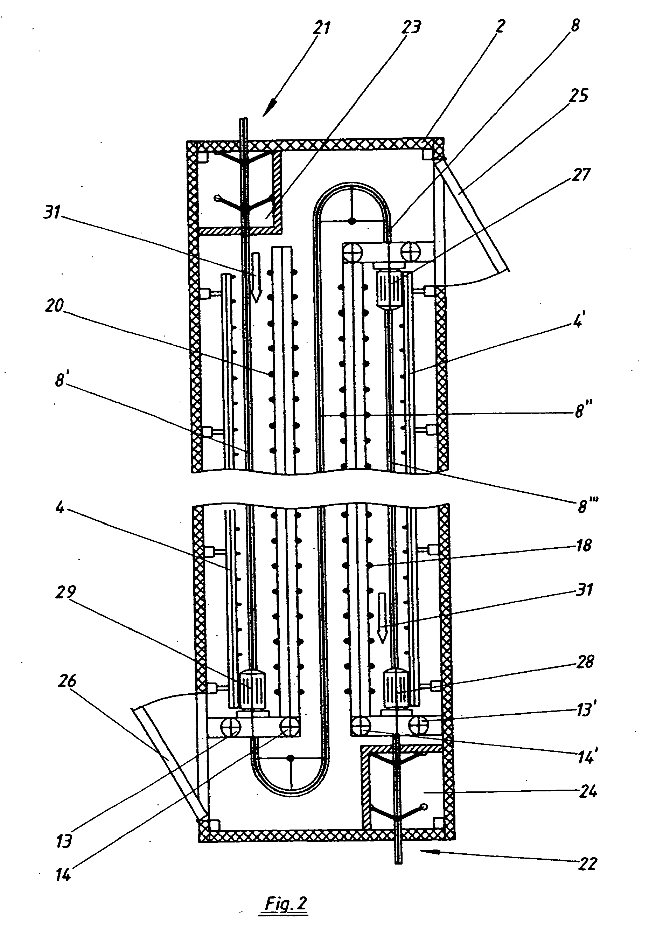

Fig. 2 zeigt eine Draufsicht der Vorrichtung im Schnitt. Der Brühraum 2 weist am Eintrittsbereich 21 sowie am Austrittsbereich 22 des durch ihn hindurch verlaufenden Transportorgans 8 jeweils eine Schleusenkammer 23, 24 auf. Ausserdem weist die Brühkammer 2 zwei Begehtüren 25, 26 als Einstieg für eine Person auf. Zum Antrieb des als Schlachtkette ausgebildeten Transportorgans 8 sind mehrere Motoren 27, 28, 29 vorgesehen. Gleiche Bauteile sind mit gleichen Bezugszahlen versehen.

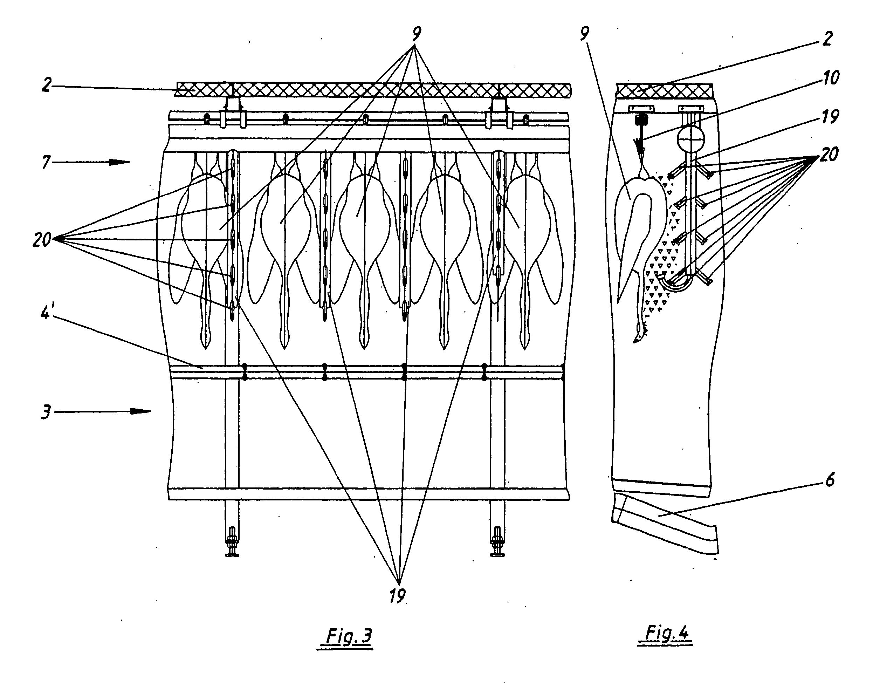

Die Fig. 3 und 4 zeigen eine Seitenansicht sowie eine Vorderansicht der Vorrichtung in einem ersten Teilschnitt. Hier wird deutlich, dass die an den Sackrohren 19 angeordneten Düsen 20 jeweils gegen einen ihr zugeordneten, vorbestimmten Bereich des jeweils an ihr vorbei transportierten Körpers 9 gerichtet sind. Gleiche Bauteile sind mit gleichen Bezugszahlen versehen.

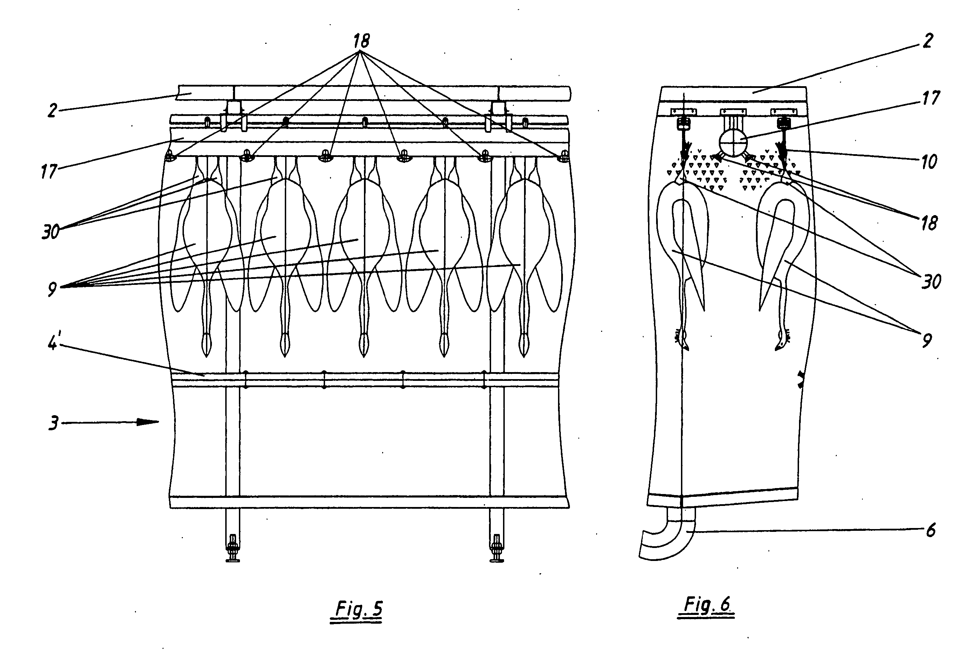

Die Fig. 5 und 6 zeigen eine Vorderansicht sowie eine Seitenansicht der Vorrichtung in einem zweiten Teilschnitt. Hieraus wird ersichtlich, dass die Düsen 18 einer horizontalen Rohrleitung 17 gegen die Keulen 30 der an den Transportorganen 8 hängenden Körper 9 gerichtet sind. Gleiche Bauteile sind mit gleichen Bezugszahlen versehen.

Die Erfindung arbeitet wie folgt:
In den Brühraum 2 wird Wassserdampf 5 zur Erzeugung eines Wasserdampf-Luftgemisches 5' eingeleitet. Dabei wird der Brühraum 2 auf eine vorbestimmte Temperatur aufgeheizt. Die Körper 9 des Geflügels werden an den Füssen 10 hängend mit einer vorgegebenen Durchlaufgeschwindigkeit in Pfeilrichtung 31 entlang der Bahn des Transportorgans 8 durch den Brühraum 2 hindurchgeführt. Die Körper 9 durchlaufen im Eintrittsbereich 22 die Schleusenkammer 23, während sie parallel zu der horizontalen Rohrleitung 23 und deren Düsen 18 vorbeigeführt werden. Am Ende der horizontalen Rohrleitung 17 werden die Körper 9 entlang dem schleifenartigen Verlauf des Transportorgans 8 umgelenkt und in entgegengesetzter Richtung zwischen der horizontalen Rohrleitung 17 und den in Reihe angeordneten Sackrohren 19 und deren Düsen 18, 20 entlanggeführt. Am Ende dieses Durchlaufes werden die Körper 9 des Geflügels abermals von dem einen schleifenförmigen Verlauf aufweisenden Transportorgan 8 um 180 Grade umgelenkt und an der anderen Seite der in Reihe angeordneten Sackrohre 19 und deren Düsen 20 entlang zurückgeführt. Schliesslich passieren die Körper 9 die Schleusenkammer 24 am Austrittsbereich 22, womit sie den Brühraum 2 an dem als Schlachtkette ausgebildeten Transportorgan 8 immer noch an den Füssen 10 hängend verlassen. Während des gesamten Durchlaufes der Körper 9 durch den Brühraum 2 hindurch werden die vorbestimmten Bereiche der Körper 9 des Geflügels der gezielten Strömung des Wasserdampf-Luftgemisches 5' aus den Düsen 18, 20 ausgesetzt.

## Patentansprüche

1. Verfahren zur Vorbereitung von geschlachtetem Geflügel auf das Rupfen, bei dem die Körper des Geflügels der Wirkung eines Brüheffektes ausgesetzt werden, wobei im unteren Bereich (3) eines Brühraums (2) Wasserdampf (5) eingeleitet wird, dass der Brühraum (2) dabei auf eine vorbestimmte Temperatur aufgeheizt wird, **dadurch gekennzeichnet, dass** die Körper (9) in den aufgeheizten Brühraum (2) gegeben werden, dass innerhalb des Brühraumes (2) wenigstens eine Strömung des Wasserdampf-Luftgemisches (5') erzeugt wird, und dass die Strömung gegen vorbestimmte Bereiche, an denen sich die Federn schwerer rupfen lassen, als an anderen Bereichen des Körpers, wenigstens eines der Körper (9) des Geflügels gelenkt wird, wobei eine Strömungseinrichtung (11) wenigstens einen Ventilator (12, 12') mit einer das Wasserdampf-Luftgemisch (5') aus dem Inneren des Brühraumes (2) ansaugenden Saugleiter (13, 13') und einer das Wasserdampf-Luftgemisch (5') dem Brühraum (2) gezielt wieder zuführenden Druckleitung (14, 14') aufweist.

2. Verfahren nach Anspruch 1, **dadurch gekennzeichnet, dass** der Brühraum (2) auf eine Temperatur von etwa 55°C bis 60°C aufgeheizt wird.

3. Verfahren nach einem der Ansprüche 1 bis 2, **dadurch gekennzeichnet, dass** die im Brühraum (2) befindliche Luft mit Wasserdampf (5) gesättigt wird.

4. Verfahren nach einem der Ansprüche 1 bis 3, **dadurch gekennzeichnet, dass** die Körper (9) des Geflügels an den Füssen (10) hängend mit einer vorgegebenen Durchlaufgeschwindigkeit entlang einer Bahn eines Transportorgans (8) durch den Brühraum (2) hindurchgeführt werden.

5. Verfahren nach einem der Ansprüche 1 bis 4, **dadurch gekennzeichnet, dass** der innerhalb des Brühraumes (2) liegende Teil der Bahn des Transportorgans (8) in seiner Länge variiert wird.

6. Verfahren nach Anspruch 5, **dadurch gekennzeichnet, dass** der Kreislauf zur Schnellkühlung des Brühraumes (2) bei Bedarf zur äusseren Umgebung hin geöffnet wird.

7. Verfahren nach einem der Ansprüche 1 bis 6, **dadurch gekennzeichnet, dass** die Körper (9) im Brühraum (2) nacheinander an einer Vielzahl gelenkter Strömungen vorbeigeführt werden.

8. Verfahren nach einem der Ansprüche 1 bis 7, **dadurch gekennzeichnet, dass** die Temperatur und der Dampfgehalt des Wasserdampf-Luftgemisches (5') geregelt und gemessen werden.

9. Verfahren nach einem der Ansprüche 1 bis 8, **dadurch gekennzeichnet, dass** die Geschwindigkeit der Strömung des Wasserdampf-Luftgemisches (5') geregelt und gemessen wird.

10. Vorrichtung zur Durchführung eines Verfahrens, insbesondere nach einem der Ansprüche 1 bis 9, mit einem Brühraum (2), einer Einrichtung (4, 4') zum Einleiten von Wasserdampf (5) in den Brühraum (2), wenigstens einem Transportorgan (8) zum Transportieren der Körper (9) des Geflügels durch den Brühraum (2) hindurch, **gekennzeichnet durch, daß** die Einrichtung (4, 4') zum Einleiten von Wasserdampf (5) im unteren Bereich (3) des Brühraumes (2) angeordnet ist, **durch** eine Strömungseinrichtung (11) zur Erzeugung wenigstens einer Strömung des Wasserdampf-Luftgemisches (5') innerhalb des Brühraumes (2), und **durch** eine Lenkeinrichtung zur Lenkung einer Strömung des Wasscrdampf-Luftgemisches (5') gegen bestimmte Bereiche, an denen sich die Federn schwerer rupfen lassen, als an anderen Bereichen der Körper (9) des Geflügels, wobei die Strömungseinrichtung (11) wenigstens einen Ventilator (12, 12') mit einer das Wasserdampf-Luftgemisch (5') aus dem Inneren des Brühraumes (2) ansaugenden Saugleiter (13, 13') und einer das Wasserdampf-Luftgemisch (5') dem Brühraum (2) gezielt wieder zuführenden Druckleitung (14, 14') aufweist.

11. Vorrichtung nach Anspruch 10, **dadurch gekennzeichnet, dass** der Brühraum (2) am Eintrittsbereich (21) sowie am Austrittsbereich (22) des durch ihn hindurchverlaufenden Transportorgans (8) jeweils wenigstens eine Schleusenkammer (23, 24) aufweist.

12. Vorrichtung nach einem der Ansprüche 10 bis 11, **dadurch gekennzeichnet, dass** das Transportorgan (8) als eine durch den Brühraum (2) hindurchverlaufende Schlachtkette ausgebildet ist, die einen schleifenartig in in etwa parallelen Strängen (8', 8'', 8"') zueinander liegenden Verlauf zum lagedefinierten Abhängen der Körper (9) an ihren Füssen (10) aufweist.

13. Vorrichtung nach einem der Ansprüche 10 bis 12, **dadurch gekennzeichnet, dass** das Transportorgan (8) innerhalb des Brühraumes (2) bei einer vorgegebenen Durchlaufgeschwindigkeit eine auf eine geforderte Verweilzeit der Körper (9) in dem Brühraum (2) abgestimmte Länge aufweist.

14. Vorrichtung nach Anspruch 13, **dadurch gekennzeichnet, dass** wenigstens ein Ventilator (12, 12') einen seiner Saugleitung (13, 13') zugeordneten Klappenkasten aufweist, der eine bei Bedarf betätigbare Klappe hat, mit der eine zur äusseren Umgebung offene Klappenkasten-Öffnung verschlossen ist.

15. Vorrichtung nach einem der Ansprüche 10 bis 14, **dadurch gekennzeichnet, dass** die Lenkeinrichtung innerhalb des Brühraumes (2) angeordnete Düsenhalter (15, 16) zum Anordnen und Ausrichten jeweils wenigstens einer Düse (18, 20) aufweist.

16. Vorrichtung nach Anspruch 15, **dadurch gekennzeichnet, dass** ein erster Düsenhalter (15) als horizontale Rohrleitung (17) mit einer Anzahl von über ihre Länge und ihren Umfang verteilt angeordneten Düsen (18) ausgebildet ist, von denen jede mit ihrer Düsenmündung gegen einen ihr zugeordneten vorbestimmten Bereich des jeweils an ihr vorbei transportierten Körpers (9) gerichtet ist.

17. Vorrichtung nach einem der Ansprüche 15 oder 16, **dadurch gekennzeichnet, dass** ein zweiter Düsenhalter (16) als sich vertikal zwischen die Körper (9) erstreckendes Sackrohr (19) mit einer Anzahl von über seine Länge und seinen Umfang verteilt angeordneten Düsen (20) ausgebildet ist, von denen jede mit ihrer Düsenmündung gegen einen ihr zugeordneten vorbestimmten Bereich des jeweils als an vorbei transportierten Körpers (9) gerichtet ist.

18. Vorrichtung nach einem der Ansprüche 15 bis 17, **dadurch gekennzeichnet, dass** die ersten und zweiten Düsenhalter (15, 16) in Reihe angeordnet sind, wobei die Reihen zwischen parallelen Strängen (8', 8", 8"') der schleifenartig verlaufenden Schlachtkette angeordnet sind.

19. Vorrichtung nach einem der Ansprüche 10 bis 18, **dadurch gekennzeichnet, dass** sie ein automatisches Mess- und Regelsystem zum Messen und Regeln der Temperatur und des Dampfgehaltes des Wasserdampf-Luftgemisches (5') in dem Brühraum (2) aufweist.

20. Vorrichtung nach einem der Ansprüche 10 bis 19, **dadurch gekennzeichnet, dass** sie ein automatisches Mess- und Regelsystem zum Messen und Regeln der Strömungsgeschwindigkeit des Wasserdampf-Luftgemisches (5') innerhalb der Strömungseinrichtung (11) aufweist.

## Claims

1. A method for preparing slaughtered poultry for plucking, whereby the poultry carcasses are subjected to the effect of a scalding, whereby aqueous vapour (5) is introduced in the lower part (3) of a scalding chamber (2), that the scalding chamber (2) is thereby heated to a predetermined temperature, **characterized in that** the carcasses (9) are introduced into the heated scalding chamber (2), that at least one flow of mixed aqueous vapour and air (5') is generated in the scalding chamber (2), and that the flow is directed towards predetermined areas of at least one carcass (9) in which the feathers are less easy to pluck than in other carcass areas, whereby a flow device (11) comprises at least one fan (12, 12') comprising a suction line (13, 13') sucking the aqueous vapour/air mixture (5') from the interior of the scalding chamber (2), and a pressure pipe (14, 14') for conducting the aqueous vapour/air mixture (5') directly back to the scalding chamber (2).

2. Method according to claim 1, **characterized in that** the scalding chamber (2) is heated to a temperature of about 55°C to 60°C.

3. Method according to any of the claims 1 and 2, **characterized in that** the air present in the scalding chamber (2) is saturated with aqueous vapour.

4. Method according to any of the claims 1 to 3, **characterized in that** the poultry carcasses (9) hanging by the feet are guided through the scalding chamber (2) at a predetermined rate along a line of a conveyor means (8).

5. Method according to any of the claims 1 to 4, **characterized in that** the part of the conveyor line (8) situated inside the scalding chamber (2) has a variable length.

6. Method according to claim 5, **characterized in that** the circulation for a rapid cooling of the scalding chamber (2) when required can be opened towards the environment.

7. Method according to any of the claims 1 to 6, **characterized in that** the carcasses (9) in the scalding chamber (2) successively pass a plurality of directed flows.

8. Method according to any of the claims 1 to 7, **characterized in that** the temperature and the vapour content of the aqueous vapour/air mixture (5') is controlled and measured.

9. Method according to any of the claims 1 to 8, **characterized in that** the flow rate of the aqueous vapour/air mixture (5') is controlled and measured.

10. Device for carrying out a method, particularly according to any of the claims 1 to 9, having a scalding chamber (2), a device (4, 4') for introducing aqueous vapour (5) into the scalding chamber (2), and at least one conveying means (8) for conveying the poultry carcasses (9) through the scalding chamber (2), **characterized in that** the device (4, 4') for introducing the aqueous vapour (5) is arranged in the lower area (3) of the scalding chamber (2), in a flow device (11) for generating at least one flow of aqueous vapour/air mixture (5') inside the scalding chamber (2), and in a directing device for directing a flow of aqueous vapour/air mixture (5') towards certain areas in which the feathers are less easy to pluck than in other areas of the poultry carcass (9), whereby the flow device (11) comprises at least one fan (12, 12') with a suction line (13, 13') for sucking the aqueous vapour/air mixture (5') from the interior of the scalding chamber (2), and a pressure pipe (14, 14') for conducting the aqueous vapour/air mixture (5') directly back to the scalding chamber (2).

11. Device according to claim 10, **characterized in that** the scalding chamber (2) at the inlet area (21) and the outlet area (22) of the throughgoing conveyor means (8) comprises at least one lock chamber (23, 24).

12. Device according to any of the claims 10 to 11, **characterized in that** the conveyor means (8) is formed as a slaughter line which is passing through the scalding chamber (2) and has an loop-like course as approximately mutually parallel strings (8', 8", 8"') for the hanging of the carcasses (9) by their feet (10) in fixed positions.

13. Device according to any of the claims 10 to 12, **characterized in that** the conveying means (8) inside the scalding chamber (2) at a predetermined passing rate has a length adapted to the necessary residence time of the carcasses (9) in the scalding chamber (2).

14. Device according to claim 13, **characterized in that** at least one fan (12, 12') has a flap box connected to the suction line (13, 13') thereof, which flap box comprises a flap which may be actuated if required, and by means of which a flap box being open towards the environment can be closed.

15. Device according to any of the claims 10 to 14, **characterized in that** the directing means inside the scalding chamber (2) comprise nozzle holders for arranging and orienting at least one nozzle (18, 20).

16. Device according to claim 15, **characterized in that** a first nozzle holder (15) is shaped as a horisontal conduit (17) with a plurality of nozzles (18) arranged across its length and its perimeter, each of which has its nozzle opening directed towards a predetermined area which is assigned to the respective nozzle of the carcass (9) conveyed past the nozzle.

17. Device according to any of the claims 15 or 16, **characterized in that** a second nozzle holder (16) is shaped as a blind tube (19) extending vertically between the carcasses (9) and having a number of nozzles (20) distributed across its length and perimeter, each of which has its nozzle openings directed towards a predetermined area which is assigned to the respective nozzle of the carcass (9) conveyed past the nozzle.

18. Device according to any of the claims 15 to 17, **characterized in that** the first and second nozzle holder (15, 16) are arranged in a row, whereby the rows are arranged between parallel strings (8', 8", 8"') of the slaughter line extending in a loop-like manner.

19. Device according to any of the claims 10 to 18, **characterized in that** it comprises a automatic measuring and control system for measuring and controlling the temperature and the vapour content of the aqueous vapour/air mixture (5') in the scalding chamber (2).

20. Device according to any of the claims 10 to 19, **charcterized in that** it comprises an automatic measuring and control system for measuring and controlling the flow rate of the aqueous vapour/air mixture (5') in the flow device (11).

## Revendications

1. Procédé de préparation d'une volaille abattue au plumage, dans lequel les corps des volailles sont exposés à l'action d'un effet d'échaudage, où de la vapeur d'eau (5) est introduite dans la zone inférieure (3) d'une enceinte d'échaudage (2), en ce que l'enceinte d'échaudage (2) est ainsi chauffée à une température prédéterminée, **caractérisé en ce que** les corps (9) sont introduits dans l'enceinte d'échaudage chauffée (2), **en ce qu'**à l'intérieur de l'enceinte d'échaudage (2) est produit au moins un écoulement du mélange vapeur d'eau-air (5') et **en ce que** l'écoulement est guidé vers des zones prédéterminées, auxquelles les plumes sont plus difficiles à arracher qu'aux autres zones du corps, au moins d'un des corps (9) des volailles, où une installation d'écoulement (11) présente au moins un ventilateur (12, 12') avec une conduite d'inspiration (13, 13') aspirant le mélange de vapeur d'eau-air (5') de l'intérieur de l'enceinte d'échaudage (2) et une conduite de pression (14, 14') amenant le mélange de vapeur d'eau-air (5') à l'enceinte d'échaudage (2) à nouveau d'une manière ciblée.

2. Procédé selon la revendication 1, **caractérisé en ce que** l'enceinte d'échaudage (2) est chauffée à une température d'environ 55°C à 60°C.

3. Procédé selon l'une des revendications 1 à 2, **caractérisé en ce que** l'air se trouvant dans l'enceinte d'échaudage (2) est saturé en vapeur d'eau (5).

4. Procédé selon l'une des revendications 1 à 3, **caractérisé en ce que** les corps (9) des volailles, en étant accrochés aux pattes (10), sont amenés à passer à une vitesse de passage prédéterminée le long d'un chemin d'un organe de transport (8) à travers l'enceinte d'échaudage (2).

5. Procédé selon l'une des revendications 1 à 4, **caractérisé en ce que** la partie du chemin de l'organe de transport (8) située à l'intérieur de l'enceinte d'échaudage (2) est modifiée quant à sa longueur.

6. Procédé selon la revendication 5, **caractérisé en ce que** le circuit pour le refroidissement rapide de l'enceinte d'échaudage (2), en cas de besoin, est ouvert vers l'environnement extérieur.

7. Procédé selon l'une des revendications 1 à 6, **caractérisé en ce que** les corps (9) dans l'enceinte d'échaudage (2) sont amenés à passer les uns après les autres devant une multitude d'écoulements dirigés.

8. Procédé selon l'une des revendications 1 à 7, **caractérisé en ce que** la température et la teneur en vapeur du mélange de vapeur d'eau-air (5') sont réglées et mesurées.

9. Procédé selon l'une des revendications 1 à 8, **caractérisé en ce que** la vitesse de l'écoulement du mélange de vapeur d'eau-air (5') est réglée et mesurée.

10. Dispositif pour l'exécution d'un procédé, en particulier selon l'une des revendications 1 à 9, avec une enceinte d'échaudage (2), une installation (4, 4') pour introduire de la vapeur d'eau (5) dans l'enceinte d'échaudage (2), au moins un organe de transport (8) pour le transport des corps (9) des volailles à travers l'enceinte d'échaudage (2), **caractérisé en ce que** l'installation (4, 4') pour introduire la vapeur d'eau (5) et disposée dans la zone inférieure (3) de l'enceinte d'échaudage (2), par une installation de guidage (11) pour produire au moins un écoulement du mélange de vapeur d'eau-air (5') à l'intérieur de l'enceinte d'échaudage (2), et par une installation de guidage pour guider un écoulement du mélange de vapeur d'eau-air (5') contre des zones déterminées auxquelles les plumes sont plus difficiles à arracher qu'à d'autres zones des corps (9) de la volaille, où l'installation d'écoulement (11) présente au moins un ventilateur (12, 12') avec une conduite d'aspiration (13) aspirant le mélange de vapeur d'eau-air (5') de l'intérieur de l'enceinte d'échaudage (2) et une conduite de pression (14, 14') ramenant le mélange de vapeur d'eau-air (5') d'une manière ciblée à nouveau dans l'enceinte d'échaudage (2).

11. Dispositif selon la revendication 10, **caractérisé en ce que** l'enceinte d'échaudage (2) présente à la zone d'entrée (21) et à la zone de sortie (22) de l'organe de transport (8) passant à travers celle-ci respectivement au moins une chambre d'écluse (23, 24).

12. Dispositif selon l'une des revendications 10 à 11, **caractérisé en ce que** l'organe de transport (8) est réalisé comme une chaîne d'abattage traversant l'enceinte d'échaudage (2), qui présente un cheminement en forme de boucle en brins à peu près parallèles (8', 8", 8"') les uns aux autres pour le décrochage défini en position des corps (9) à leurs pattes (10).

13. Dispositif selon l'une des revendications 10 à 12, **caractérisé en ce que** l'organe de transport (8) présente à l'intérieur de l'enceinte d'échaudage (2), à une vitesse de passage donnée, une longueur adaptée au temps de séjour requis des corps (9) dans l'enceinte d'échaudage (2).

14. Dispositif selon la revendication 13, **caractérisé en ce qu'**au moins un ventilateur (12, 12') présente un caisson à volet associé à sa conduite d'aspiration (13, 13') qui présente un volet actionnable en cas de besoin au moyen duquel est fermée une ouverture de caisson à volet ouverte vers l'environnement extérieur.

15. Dispositif selon l'une des revendications 10 à 14, **caractérisé en ce que** l'installation de guidage présente des porte-buses (15, 16) disposées à l'intérieur de l'enceinte d'échaudage (2) pour l'agencement et l'orientation respectivement d'au moins une buse (18, 20).

16. Dispositif selon la revendication 15, **caractérisé en ce qu'**un premier porte-buse (15) est réalisé comme conduite tubulaire horizontale (17) avec un nombre de buses (18) réparties sur sa longueur et sa périphérie dont chacune est dirigée avec son ouverture de buse contre une zone prédéterminée associée à celle-ci du corps (9) passant devant celle-ci.

17. Dispositif selon l'une des revendications 15 ou 16, **caractérisé en ce qu'**un deuxième porte-buse (16) est réalisé sous forme de tube borgne (19) s'étendant verticalement entre les corps (9) avec un nombre de buses (20) réparties sur sa longueur et sa périphérie, dont chacune est dirigée avec son ouverture de buse vers une zone prédéterminée associée à elle du corps (9) passant respectivement devant elle.

18. Dispositif selon l'une des revendications 15 à 17, **caractérisé en ce que** les premier et deuxième porte-buses (15, 16) sont disposés en une rangée, où les rangées sont disposées entre des brins parallèles (8', 8", 8"') de la chaîne d'abattage s'étendant en forme de boucle.

19. Dispositif selon l'une des revendications 10 à 18, **caractérisé en ce qu'**il possède un système de mesure et de régulation automatique pour la mesure et la régulation de la température et de la vapeur d'eau du mélange de vapeur d'eau-air (5') dans l'enceinte d'échaudage (2).

20. Dispositif selon l'une des revendications 10 à 19, **caractérisé en ce qu'**il présente un système de mesure et de régulation automatique pour la mesure et la régulation de la vitesse d'écoulement du mélange de vapeur d'eau-air (5') à l'intérieur de l'installation d'écoulement (11).
